(19) Europäisches Patentamt
European Patent Office
Office européen des brevets

(11) **EP 3 316 499 A1**

(12) **EUROPEAN PATENT APPLICATION**

(43) Date of publication:
**02.05.2018 Bulletin 2018/18**

(51) Int Cl.:
**H04B 10/50** (2013.01)  **H04B 10/61** (2013.01)

(21) Application number: **16306407.4**

(22) Date of filing: **27.10.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Alcatel Lucent
91620 Nozay (FR)**

(72) Inventor: **ERIKSSON, Tobias
70435 Stuttgart (DE)**

(74) Representative: **MERH-IP Matias Erny Reichl
Hoffmann
Patentanwälte PartG mbB
Paul-Heyse-Strasse 29
80336 München (DE)**

(54) **SUB-QUADRATURE DISCRETE MULTITONE MODULATION FOR NONLINEAR MITIGATION**

(57) This application relates to an optical modulation method. The method comprises generating a first driving signal using an amplitude modulation, generating a second driving signal using a multicarrier modulation and modulating an optical source based on the first driving signal and the second driving signal to obtain a modulated optical signal. According to the application, one of the first driving signal and the second driving signal is for modulating the I-component of the optical signal and the other of the first driving signal and the second driving signal is for modulating the Q-component of the optical signal.

Fig. 2

## Description

## Technical Field

This application relates to modulation/demodulation methods and devices for use in the field of optical communications, particularly for improving tolerance to nonlinear transmission effects in optical communication systems.

## Background

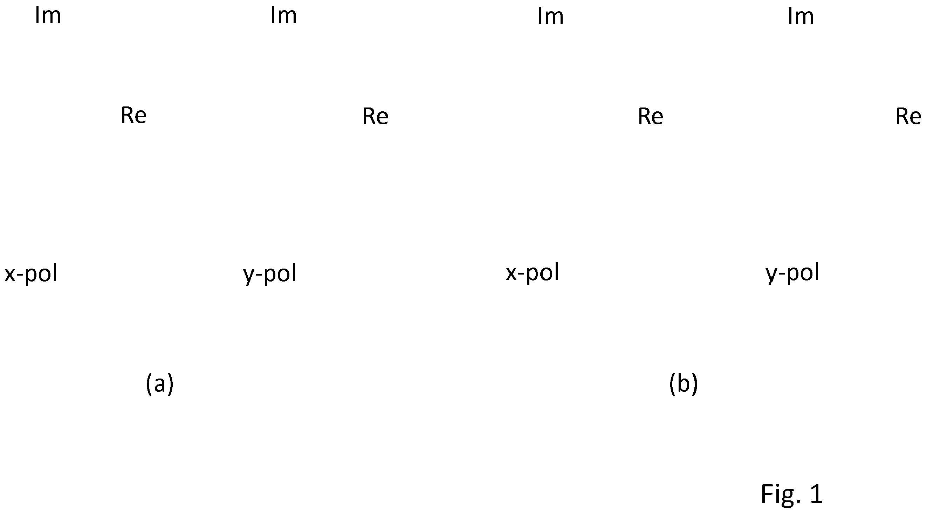

Fiber optical communication systems are limited by Kerr nonlinearities which restrict transmission power and thus signal-to-noise ratio (SNR) after each fiber span. The nonlinear distortions arising in fiber optical transmission systems can be compensated or reduced using several techniques. One conventional method applies compensation to a received quadrature phase shift keying (QPSK) signal using digital back propagation (DBP) in the digital signal processing domain. Fig. 1(a) shows a constellation of a conventional QPSK modulation of a dual-polarization signal, where, for each polarization signal, four symbols having both real and imaginary components are transmitted, each of which represents a combination of two binary bits. Although DBP effectively compensates the nonlinear distortions for single channel transmission systems, the computational complexity of this method is very high, as it involves solving the coupled nonlinear Schrödinger equation. Besides, the DBP method can be applied to each channel separately for wavelength division multiplexed (WDM) systems, but the gains seen for this approach are very small compared to employing no nonlinear compensation.

A recent method, designated phase conjugated twin waves (PCTW), applies a modulation technique that has stronger resilience to nonlinear effects compared to conventional modulation schemes. This method transmits a phase conjugated copy of a signal on, for instance, an orthogonal polarization or a separate wavelength (X. Liu et al., "Phase-conjugated twin waves for communication beyond the Kerr nonlinearity limit", Nature Photonics, vol. 7 no. 7, 560-568, 2013). It is noted that the signal and the conjugated copy may be added at the receiver side, which effectively cancels nonlinear phase noise. The nonlinear mitigation may act as "squeezing" of the nonlinear effects. Fig. 1(b) shows a constellation of a PCTW modulation of a dual-polarization signal. The PCTW modulation can be regarded as only transmitting data on the two real axes of the four dimensional optical field. The nonlinear interactions manifests mostly on the imaginary axis, leading to a noise-like broadening of the constellation points along the imaginary part, i.e. most of the nonlinear distortions are squeezed along the imaginary axis which carries no information. This effect is more pronounced if the dispersion map is engineered either span by span or by applying pre- and post-compensation in the digital domain at the transmitter and receiver side, respectively. However, with conventional PCTW half of the spectral efficiency is lost, since the imaginary axis is not used for modulation.

Accordingly, there is a need for optical communication systems with improved tolerance to nonlinear interactions, so that increased transmission distance can be achieved without changing optical channel itself or implementing extremely computational-heavy signal processing for nonlinearity cancelation.

## Summary

The present document proposes a new scheme for optical modulation and demodulation. In particular, the present document discloses methods and devices having the features of the respective independent claims for generating an optical signal to be transmitted through an optical channel, e.g. through a nonlinear optical channel, in an optical communication system.

An aspect of the disclosure relates to an optical modulation method. The method comprises generating a first driving signal using amplitude modulation. In general, the amplitude modulation mainly modulates the real part of a signal. Examples of such amplitude modulation can be Binary-Phase-Shift-Keying (BPSK) modulation, Pulse-Amplitude Modulation (PAM), and so on. Thus, the first driving signal may comprise a plurality of amplitude modulation symbols. Accordingly, the amplitude modulation symbols may comprise BPSK symbols and/or PAM symbols. However, the amplitude modulation does not need to be based on rectangular modulation formats; namely, the amplitude modulation is not restricted to the mentioned PAM modulation or being rectangular BPSK/M-PAM signals. The amplitude modulation may comprise any real-valued modulation formats. For instance, probabilistically-shaped real-valued signals could be used as amplitude modulation signals, i.e. the amplitude modulation symbols may also comprise probabilistically-shaped real-valued symbols. Alternatively, any type of amplitude modulation signals may be also considered, i.e. the amplitude modulation symbols may comprise any type of amplitude modulation symbols.

The method also comprises generating a second driving signal using multicarrier modulation. According to embodiments, the generating a second driving signal using the multicarrier modulation may comprise generating a multicarrier signal. In other words, the second driving signal may comprise the multicarrier signal. Different from the amplitude modulation, the multicarrier modulation may be achieved by applying a complex-valued modulation to incoming data, and data symbols of complex-valued modulation, i.e. complex-valued modulation symbols, may therefore be obtained during the multicarrier modulation. In general, complex-valued modulation symbols may comprise, for example, Quadrature-Phase-Shift-Keying (QPSK) symbols and/or Quadrature-Amplitude-Modulation (QAM) symbols. However, the multicarrier modulation may be also achieved by applying any complex-valued modulation schemes, and the complex-valued modulation symbols is not restricted to the mentioned QPSK/QAM symbols but may use also other complex-valued modulation symbols.

Subsequently, the method further comprises modulating an optical source based on the first driving signal and the second driving signal to obtain a modulated optical signal. According to the disclosure, one of the first driving signal and the second driving signal may be for modulating the I-component (in-phase component) of the optical signal. The other of the first driving signal and the second driving signal may be for modulating the Q-component (quadrature component) of the optical signal. For example, the first driving signal may be for modulating the I-component of the optical signal, and the second driving signal may be for modulating the Q-component of the optical signal. In other embodiments, the first driving signal may be for modulating the Q-component of the optical signal, and the second driving signal may be for modulating the I-component of the optical signal.

In general, the multicarrier signal may have a plurality of frequency sub-bands associated with a plurality of complex-valued modulation symbols. In an embodiment, the generating a multicarrier signal may comprise generating the plurality of complex-valued modulation symbols. Moreover, the generating a multicarrier signal may comprise transforming the plurality of complex-valued modulation symbols into the multicarrier signal. It is noted that the complex-valued modulation symbols may be assigned to respective frequency sub-bands of the multicarrier signal. In particular, the complex-valued modulation symbols may be assigned to different frequency sub-bands of the multicarrier signal. Further according to embodiments, the plurality of complex-valued modulation symbols may comprise a set of parallel complex-valued modulation symbols. In general, the set of parallel complex-valued modulation symbols can be considered as a plurality of parallel data streams mapped onto complex values. More specifically, a serial input data sequence (e.g. a high-speed binary serial input data) is divided into, for example, N parallel data streams (e.g. lower-speed binary streams). Every M number of bits in each parallel data stream indexed by n (where n=0, 1, ..., N-1) are grouped together and mapped onto complex values $C_n = A_n + jB_n$ according to a certain mapping. In this case, the generating the plurality of complex-valued modulation symbols comprises converting a serial data bit stream into the set of parallel complex-valued modulation symbols. The conversion may be accomplished using a complex-valued modulation mapping.

According to the disclosure, the method may further comprise applying a Hermitian symmetry operation to the generated complex-valued modulation symbols prior to the transforming. As such, the complex-valued modulation symbols satisfy the Hermitian symmetry property before being sent to the transforming step. Furthermore, the transforming the complex-valued modulation symbols into the multicarrier signal may comprise applying an inverse fast Fourier transform (IFFT) to the complex-valued modulation symbols. Accordingly, the transformed multicarrier signal comprises a real-value time sequence which has most of its signal energy around zero value. In an embodiment, the real-value time sequence may have a Gaussian-like distribution. For example, the transformed multicarrier signal may comprise a discrete multitone (DMT) signal. In other words, most energy of the multicarrier signal is located around zero amplitude/power, which can be modeled as a zero-mean Gaussian-distributed process, and therefore the joint effect of the first driving signal and the second driving signal (i.e. the multicarrier signal) makes a contribution to the modulated optical signal to still resemble a real-valued signal with minor perturbations, thereby revealing similar behaviour as a phase conjugated twin wave (PCTW) signal (e.g. the squeezing effect for the nonlinear mitigation), which exhibits increased nonlinear transmission performance compared to conventional modulation formats. In some embodiments, the real-value time sequence may have other types of distribution, according to which most of the signal energy is located around zero value. Consequently, the resulting modulated optical signal generated based on the proposed optical modulation method has high tolerance towards fiber nonlinearities like a PCTW signal, but no sacrifice in spectral efficiency is caused, which is more advantageous in optical system designs than the PCTW techniques. According to the proposed method, a lower spectral efficiency on the multicarrier signal can be used to cope with the fact that the nonlinear distortions are projected into this axis. In this case, one may not have the same spectral efficiency as PM-QPSK but higher spectral efficiency than PCTW.

According to the disclosure, for the multicarrier modulation a higher order modulation format may be used than for the amplitude modulation. Namely, the second driving signal may comprise higher order modulation format symbols than the first driving signal. Further, the order of the modulation format applied for the multicarrier modulation may be increased with the modulation format order applied for the amplitude modulation in order to increase the spectral efficiency. For example, when 4-PAM is used for the amplitude modulation, 16-QAM may be used for the multicarrier modulation accordingly. Moreover, the amplitude modulation and the multicarrier modulation (e.g. DMT) may be designed separately for achieving optimum performance.

Alternatively, the complex-valued modulation symbols may comprise lower order modulation format symbols to reduce impairments due to modulation of the other component of the optical signal by the first driving signal (i.e. the amplitude modulation part). Furthermore, each of the complex-valued modulation symbols may be associated with one of the subcarrier signals of the multicarrier signal. It is noted that the subcarrier signals may not necessarily be modulated with the same modulation format. According to some embodiments, the subcarrier signals may be modulated with different modulation formats. For example, some of the subcarrier signals may be modulated with 4QAM, while some of the subcarrier signals may be modulated with 16QAM. According to the disclosure, the assignment of the applied modulations formats may be optimized to further improve the transmission performance. For this, the method may further comprise optimizing the modulation formats of the subcarrier signals of the multicarrier signal. Furthermore, the method may comprise FEC encoding for the amplitude modulation signal and/or for the multicarrier modulation signal.

Different FEC overheads may be used for the amplitude modulation signal (e.g. PAM signals) and for the individual sub-bands for the optimization. The optimization may be accomplished using a water-filling method, so that the throughput can be maximized taking both the noise from the linear and nonlinear effects into account. For example, different modulation formats or different FEC overheads may be used for the water-filling method. Further, this optimization may be accomplished using a joint optimization of modulation format and/or FEC overhead and/or the transmitted power per subband.

The method may further comprise adjusting power for the I-component and/or the Q-component of the optical signal to equalize performance of the I-component and Q-component of the optical signal. In particular, the power for the I-component and/or the Q-component of the optical signal may be adjusted for maximized performance of the system. In embodiments, the modulated optical signal may be transmitted through an optical channel formed by an optimum dispersion mapped optical fiber link to achieve optimal performance in a nonlinear transmission. In embodiments, the method may further comprise pre-distorting the first driving signal and/or the second driving signal prior to the modulating to further improve the transmission performance.

In an embodiment, the optical signal may comprise a first polarization signal and a second polarization signal. As mentioned above, one of the first driving signal and the second driving signal may be for modulating the I-component of the first polarization signal, and the other of the first driving signal and the second driving signal may be for modulating the Q-component of the first polarization signal. The method may further comprise generating a third driving signal using a further amplitude modulation (e.g. the BPSK modulation and/or PAM modulation). The method may also comprise generating a fourth driving signal using a further multicarrier modulation which may be similar as for generating the second driving signal. According to the disclosure, one of the third driving signal and the fourth driving signal may be for modulating the I-component of the second polarization signal. The other of the third driving signal and the fourth driving signal may be for modulating the Q-component of the second polarization signal. For example, the third driving signal may be for modulating the I-component of the second polarization signal, and the fourth driving signal may be for modulating the Q-component of the second polarization signal. In other embodiments, the third driving signal may be for modulating the Q-component of the second polarization signal, and the fourth driving signal may be for modulating the I-component of the second polarization signal. In case of considering the first polarization signal and the second polarization signal, the FEC encoding can also be done jointly over the two polarizations.

Configured as above, the proposed modulation scheme combining an amplitude modulation on one axis (e.g. the I- or Q-component) of the optical signal and a multicarrier modulation on the other axis (e.g. the Q- or I-component) of the optical signal allows for transmission with increased nonlinear tolerance without sacrificing in spectral efficiency or with increased spectral efficiency over conventional PCTW. By designing systems with improved tolerance to nonlinear interactions, increased transmission distance can be achieved. The proposed optical modulation method modifies mainly the modulation part of a conventional coherent fiber-optical transmission system, which avoids changing the channel itself or implementing computational-inefficient signal processing for mitigating nonlinear effects during transmission.

Another aspect of the disclosure relates to an optical demodulation method. The method comprises converting an optical signal into a corresponding electrical signal. In particular, a first component of the electrical signal is associated with a first component of the optical signal and a second component of the electrical signal is associated with a second component of the optical signal. According to the disclosure, one of the first and second components of the optical signal may be the I-component of the optical signal. The other of the first and second components may be the Q-component of the optical signal. In other words, the I-component and the Q-component of the optical signal may be assigned in different ways to the first component and the second component of the electrical signal.

The method may also comprise processing the first component of the electrical signal using an amplitude demodulation. In general, the amplitude demodulation mainly demodulates a signal which is amplitude-modulated, i.e. the real part of the signal is amplitude-modulated. Similar to the amplitude modulation as mentioned above, examples of such amplitude demodulation can comprise Binary-Phase-Shift-Keying (BPSK) demodulation and/or Pulse-Amplitude Modulation (PAM) demodulation. Thus, the first component of the electrical signal may comprise a plurality of amplitude modulation symbols. Accordingly, the amplitude modulation symbols may comprise BPSK symbols and/or PAM symbols. As mentioned above, the amplitude modulation may comprise any real-valued modulation formats and the amplitude modulation symbols may comprise probabilistically-shaped real-valued symbols, any type of amplitude modulation symbols, and so on.

The method may further comprise processing the second component of the electrical signal using a multicarrier demodulation. According to embodiments, the second component of the electrical signal may comprise a multicarrier signal. Thus, the processing the second component of the electrical signal may comprise transforming the multicarrier signal into a plurality of complex-valued modulation symbols. In general, the transforming the multicarrier signal into the complex-valued modulation symbols may comprise applying a fast Fourier transform (FFT) to the multicarrier signal. According to an embodiment, the complex-valued modulation symbols may comprise Quadrature-Phase-Shift-Keying (QPSK) symbols and/or Quadrature-Amplitude-Modulation (QAM) symbols. As mentioned above, the complex-valued modulation symbols is not restricted to the mentioned QPSK/QAM symbols, but may be based on other complex-valued modulation symbols. It is noted that each of the complex-valued modulation symbols may be assigned to one frequency sub-band of the multicarrier signal, respectively. As mentioned above, the complex-valued modulation symbols may be assigned to different frequency sub-bands of the multicarrier signal.

It is noted that the multicarrier signal may comprise a real-value time sequence having most of its signal energy around zero value. In an embodiment, the real-value time sequence may have a Gaussian-like distribution. For example, the multicarrier signal may comprise a discrete multitone (DMT) signal. Accordingly, most energy of the multicarrier signal is located around zero (amplitude/power) as mentioned above, and the multicarrier reveals similar behaviour as a phase conjugated twin wave (PCTW) signal (e.g. the squeezing effect for the nonlinear mitigation), which has higher tolerance to fiber nonlinearities compared to conventional modulation formats. In some embodiments, the real-value time sequence may have other types of distribution, according to which most of the signal energy is located around zero value.

Further according to embodiments, the plurality of complex-valued modulation symbols may comprise a set of parallel complex-valued modulation symbols. In this case, the processing the second component of the electrical signal further comprises converting the set of parallel complex-valued modulation symbols into a serial data bit stream. The conversion may be accomplished using a complex-valued modulation demapping.

As mentioned above, it is also possible that the first component of the electrical signal may comprise higher order PAM symbols and the complex-valued modulation symbols may comprise higher order QAM symbols to increase the spectral efficiency. Alternatively, the complex-valued modulation symbols may comprise lower order modulation format symbols. It is further noted that each of the complex-valued modulation symbols may be associated with one respective of the subcarrier signals of the multicarrier signal. The complex-valued modulation symbols may be associated with the subcarrier signals of the multicarrier signal. As indicated above, the subcarrier signals may be modulated with different modulation formats.

Furthermore, the method may comprise FEC decoding for the amplitude demodulation signal and/or for the multicarrier demodulation signal. Different FEC overheads may be used for the amplitude demodulation signal (e.g. PAM signals) and for the individual sub-bands based on the FEC encoding at the transmitter side. In embodiments, the method may further comprise applying dispersion compensation to the converted electrical signal to further improve the transmission performance. It is appreciated that pre- and post- compensation of the dispersion may be optimized to increase the performance. This may be applied at the transmitter and/or receiver side and/or per fiber span. For instance, half of the dispersion of the link can be compensated for in the transmitter and the rest in the receiver. Dispersion compensation can also be done in the electrical domain by using dispersion compensating modules per span, compensating for instance 50% before the span and 50% after. For different modulation schemes, the optimum dispersion compensation configuration varies. For instance for conventional modulation formats such as PM-QPSK or PM-MQAM, the optimum is to let as much dispersion as possible accumulate and compensate all the dispersion in the transmitter or in the receiver.

Also, similar to the above described modulation method, the optical demodulation method may be applied to dual-polarization schemes. In this case, the FEC encoding/decoding can also be performed jointly over two polarizations.

Configured as above, the proposed optical demodulation method is applied at the receiver side to demodulate the received signal which has been modulated using the proposed optical modulation method as indicated above. By designing systems with improved tolerance to nonlinear interactions, increased transmission distance can be achieved without changing the channel itself or implementing computational-inefficient signal processing for nonlinearity mitigation.

Another aspect of the disclosure relates to an optical modulation device. The optical modulation device can be used for transmitting data through an optical channel, e.g. a nonlinear optical channel. The device comprises a processor for providing a modulation driving signal. For example, the processor may be configured to generate a first driving signal using an amplitude modulation. The processor may be configured to also generate a second driving signal using a multicarrier modulation. In other words, the first driving signal may be generated through the amplitude modulation, while the second driving signal may be generated through the multicarrier modulation.

As mentioned above, the amplitude modulation may be realized, for example, by means of Binary-Phase-Shift-Keying (BPSK) modulation and/or Pulse-Amplitude Modulation (PAM). Accordingly, the generated first driving signal may comprise an amplitude modulation signal having amplitude modulation symbols. As mentioned above, the amplitude modulation may comprise any real-valued modulation formats and the amplitude modulation symbols may comprise probabilistically-shaped real-valued symbols, any type of amplitude modulation symbols, and so on. On the other hand, the generated second driving signal may comprise a multicarrier signal having a plurality of frequency sub-bands. In particular, the frequency sub-bands of the multicarrier signal may be associated with a plurality of complex-valued modulation symbols. As mentioned above, the complex-valued modulation symbols may comprise, for example, Quadrature-Phase-Shift-Keying (QPSK) symbols and/or Quadrature-Amplitude-Modulation (QAM) symbols and/or other complex-valued modulation symbols.

The optical modulation device also comprises an optical modulator. The optical modulator may be configured to receive the first driving signal and the second driving signal. In particular, the optical modulator may be configured to modulate an optical source based on the first driving signal and the second driving signal to obtain a modulated optical signal. According to the disclosure, one of the first driving signal and the second driving signal may be for modulating the I-component of the optical signal and the other of the first driving signal and the second driving signal may be for modulating the Q-component of the optical signal. For example, the first driving signal may be for modulating the I-component of the optical signal, and the second driving signal may be for modulating the Q-component of the optical signal. In other embodiments, the first driving signal may be for modulating the Q-component of the optical signal, and the second driving signal may be for modulating the I-component of the optical signal.

Furthermore, the processor of the optical modulation device may be configured to perform the above mentioned optical modulation method. For example, the processor may be configured to generate the plurality of complex-valued modulation symbols. The processor may be also configured to transform the plurality of complex-valued modulation symbols into the multicarrier signal, e.g. by applying an inverse fast Fourier transform (IFFT) to the complex-valued modulation symbols. By way of this, each of the complex-valued modulation symbols may be assigned to one frequency sub-band of the multicarrier signal, respectively. Moreover, the processor may be configured to process the generated complex-valued modulation symbols using a Hermitian symmetry operation prior to the IFFT, so that the complex-valued modulation symbols satisfy the Hermitian symmetry prior to the transformation. Accordingly, the transformed multicarrier signal may comprise a real-value time sequence which has a Gaussian-like distribution. For example, the transformed multicarrier signal may comprise a discrete multitone (DMT) signal for modulating one axis (e.g. the Q-component) of the optical signal. Combining with the generated amplitude modulation signal for modulating the other axis (e.g. the I-component), increased nonlinear transmission performance can be achieved as mentioned above.

Further according to embodiments, the plurality of complex-valued modulation symbols may comprise a set of parallel complex-valued modulation symbols. In this case, the processor of the optical modulation device is configured to convert a serial data bit stream into the set of parallel complex-valued modulation symbols using a complex-valued modulation mapper. In addition, in order to increase the spectral efficiency, the order of the modulation format applied for the multicarrier modulation may be increased with the modulation format order applied for the amplitude modulation. As indicated above, the cardinality of the amplitude modulation and the multicarrier (e.g. DMT) modulation may be decided separately. For example, when 4-PAM is used for the amplitude modulation, 16-QAM may be used for the multicarrier modulation accordingly. Alternatively, the complex-valued modulation symbols may comprise lower order modulation format symbols to reduce impairments due to modulation of, for example, the real component of the optical signal by the first driving signal. Furthermore, each subcarrier signal of the multicarrier signal associated with one of the complex-valued modulation symbols may not necessarily be modulated with the same modulation format as the other subcarrier signals. In particular, the subcarrier signals may be modulated with different modulation formats. For example, the modulation formats of the subcarrier signals of the multicarrier signal may be optimized, e.g. using a water-filling method, so that the throughput can be maximized taking both the noise from the linear and nonlinear effects into account.

It is appreciated that the optical modulation device can be extended for dual-polarization applications. In dual-polarization cases, the optical signal comprises a first polarization signal and a second polarization signal. According to the disclosure, one of the first driving signal and the second driving signal may be for modulating the I-component of the first polarization signal and the other of the first driving signal and the second driving signal may be for modulating the Q-component of the first polarization signal. The optical modulator may be configured to further receive a third driving signal and a fourth driving signal. The processor of the optical modulation device may be further configured to generate the third driving signal using a further amplitude modulation. Also, the processor may be configured to generate the fourth driving signal using a further multicarrier modulation. Similarly, one of the third driving signal and the fourth driving signal may be for modulating the I-component of the second polarization signal and the other of the third driving signal and the fourth driving signal may be for modulating the Q-component of the second polarization signal. It is noted that the further amplitude modulation may comprise BPSK and/or PAM modulation and can be the same or different from the amplitude modulation for the first driving signal. Similarly, the further multicarrier modulation may be the same or different from the multicarrier modulation for the second driving signal.

Configured as above, by means of combining an amplitude modulation on one axis (e.g. the I- or Q-component) of the optical signal and a multicarrier modulation on the other axis (e.g. the Q- or I-component) of the optical signal, the proposed optical modulation device generates a modulated optical signal analogous to a PCTW signal which reveals high tolerance to fiber nonlinearities. As a result, increased transmission distance can be achieved without sacrificing in spectral efficiency or with increased spectral efficiency over the conventional PCTW. The proposed optical modulation device modifies the modulation part of a conventional coherent fiberoptic transmission system, which avoids changing the channel itself or implementing computational-inefficient signal processing for mitigating nonlinear effects during transmission.

To further improve the transmission performance, the processor of the optical modulation device may be also configured to pre-distort the driving signal(s), e.g. the first driving signal and/or the second driving signal. For example, a pre-compensation algorithm can be implemented in the processor to process the driving signal(s). Moreover, power for the I-component and/or the Q-component of the optical signal may be adjusted to equalize performance of the I-component and Q-component of the optical signal. For achieving optimal performance in a nonlinear transmission, the optical channel may be formed by an optimum dispersion mapped optical fiber link.

Another aspect of the disclosure relates to an optical demodulation device. The device comprises a signal converting module configured to convert an optical signal into a corresponding electrical signal. In particular, a first component of the electrical signal is associated with a first component of the optical signal and a second component of the electrical signal is associated with a second component of the optical signal. Furthermore, one of the first and second components of the optical signal may be the I-component and the other of the first and second components may be the Q-component of the optical signal. The optical demodulation device also comprises a processor. The processor may be configured to process the first component of the electrical signal using an amplitude demodulation. The processor may also be configured to process the second component of the electrical signal using a multicarrier demodulation. The second component of the electrical signal may comprise a multicarrier signal.

The processor may be further configured to perform the above mentioned optical demodulation method. For example, the processor may be configured to transform the multicarrier signal into a plurality of complex-valued modulation symbols. It is noted that each of the complex-valued modulation symbols may be assigned to a corresponding one of the frequency sub-bands of the multicarrier signal. Thus, the complex-valued modulation symbols may be assigned to different frequency sub-bands of the multicarrier signal. Moreover, the plurality of complex-valued modulation symbols may comprise a set of parallel complex-valued modulation symbols. In this case, the processor may be configured to convert the set of parallel complex-valued modulation symbols into a serial data bit stream using a complex-valued modulation demapper.

For transforming the multicarrier signal into the complex-valued modulation symbols, the processor may be configured to apply a fast Fourier transform (FFT) to the multicarrier signal. It is further noted that the multicarrier signal may comprise a real-value time sequence having a Gaussian-like distribution. As mentioned above, one example of such multicarrier signal can be a discrete multitone (DMT) signal. Moreover, the amplitude demodulation may comprise a BPSK demodulation and/or a PAM demodulation. Also, the complex-valued modulation demapper may comprise a Quadrature-Phase-Shift-Keying (QPSK) demapper and/or a Quadrature-Amplitude-Modulation (QAM) demapper. However, as indicated above, since higher order modulation format symbols may be applied to the amplitude modulation and the complex-valued modulation symbols, an amplitude demodulation of higher order modulation formats and a higher order modulation format demapper may be applied accordingly.

Alternatively, the complex-valued modulation demapper may comprise a lower order modulation format demapper. It is further noted that each of the parallel complex-valued modulation symbols may be associated with one of the subcarrier signals of the multicarrier signal, i.e. the complex-valued modulation symbols may be associated with the subcarrier signals of the multicarrier signal. As mentioned above, the subcarrier signals may be modulated with different modulation formats. In some embodiments, the processor may be configured to further process the converted electrical signal using a dispersion compensation algorithm to improve the performance by e.g. optimizing the dispersion map.

Configured as above, the proposed optical demodulation device is applied at the receiver side to demodulate the received signal which has been modulated using the proposed optical modulation method and/or the proposed optical modulation device as indicated above. By designing systems with improved tolerance to nonlinear interactions, i.e. generating a modulated optical signal having higher tolerance towards fiber nonlinear effects, increased transmission distance can be achieved without changing the channel itself or implementing computational-inefficient signal processing for nonlinearity mitigation.

Implementations of the devices may include using, but not limited to, one or more processor, one or more application specific integrated circuit (ASIC) and/or one or more field programmable gate array (FPGA). Implementations of the apparatus may also include using other conventional and/or customized hardware such as software programmable processors.

It will be appreciated that method steps and device features may be interchanged in many ways. In particular, the details of the disclosed device can be implemented as a method and vice versa, as the skilled person will appreciate.

Brief Description of the Figures

Some embodiments of apparatus and/or methods in accordance with embodiments of the present invention are now described, by way of example only, and with reference to the accompanying drawings, in which:

**Fig. 1(a)** graphically illustrates a constellation of a conventional QPSK modulation;

**Fig. 1(b)** graphically illustrates a constellation of a PCTW modulation;

**Fig. 2(a)** schematically illustrates one possible implementation of an optical transmitter **2** according to embodiments of the disclosure;

**Fig. 2(b)** graphically illustrates a sub-quadrature DMT modulation according to embodiments of the disclosure;

**Fig. 3** schematically illustrates processing steps for the optical modulation method according to embodiments of the disclosure;

**Fig. 4** schematically illustrates one possible implementation of an optical receiver **4** according to embodiments of the disclosure;

**Fig. 5** schematically illustrates processing steps for the optical demodulation method according to embodiments of the disclosure;

**Fig. 6** schematically illustrates one possible implementation of an optical transmitter **6** according to embodiments of the disclosure; and

**Fig. 7** schematically illustrates one possible implementation of an optical receiver **7** according to embodiments of the disclosure.

**Detailed Description**

A basic aspect of this disclosure relates to optical modulation/demodulation methods and optical modulation/demodulation devices for use in the field of optical communications, particularly for performing optical modulation and demodulation at an optical transmitter and an optical receiver in a coherent optical transmission system, respectively.

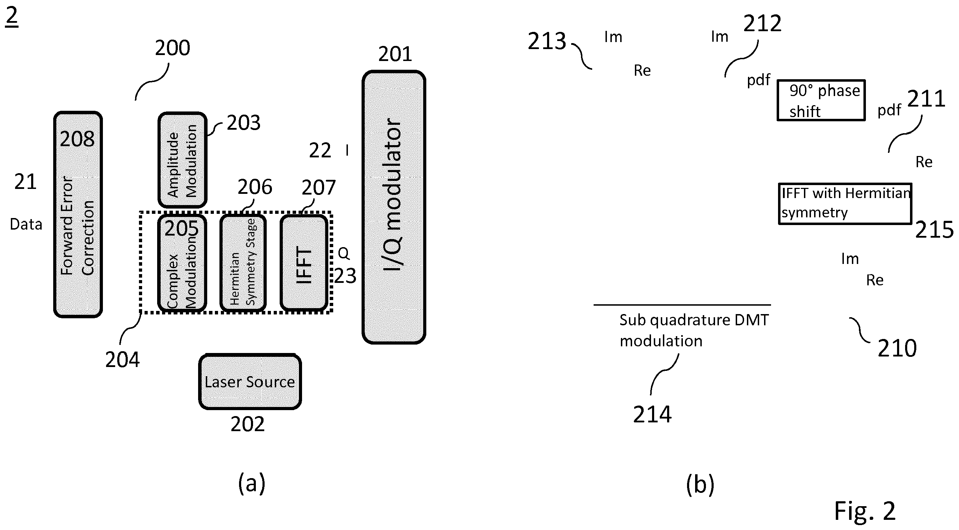

**Fig. 2(a)** is a schematic illustration of one possible implementation of an optical transmitter **2** according to embodiments of the disclosure. The optical transmitter **2** includes an optical modulation device and an optical source **202** (e.g. a laser source). The optical modulation device comprises a processor **200** (e.g. a DSP) and an optical modulator **201** (e.g. an I/Q modulator). In particular, the processor **200** receives an incoming data stream **21** and converts the data stream **21** into a proper form for providing one or more modulation driving signals to be received by the optical modulator **201** to generate a modulated optical signal. It is noted that digital-to-analog converter(s) (DACs) for converting the output(s) of the processor **200** into the driving signals are omitted for simplicity. As shown by the setup of **Fig. 2(a),** the processor **200** provides two driving signals, one of which serves as the in-phase (I) component for modulating the I-component (i.e. the real part) of the modulated optical signal, the other of which serves as the quadrature (Q) component for modulating the Q-component (i.e. the imaginary part) of the modulated optical signal.

In order to convert the data stream **21** into a suitable form, the processor **200** working in the digital domain may perform several algorithms referring to various processing stages. The data stream **21** firstly passes a forward error correction (FEC) encoder **208** which adds parity bits to the data that will be used for error correction by a receiver. According to the embodiment, the processor **200** then performs an amplitude modulation stage **203** for generating a first driving signal **22** to modulate the I-component. In other words, the processor **200** generates the first driving signal **22** using an amplitude modulation. The processor **200** further performs a multicarrier modulation stage **204** for generating a second driving signal **23** to modulate the Q-component, which means the processor **200** generates the second driving signal **23** using a multicarrier modulation. However, the roles of the first driving signal and the second driving signal can be exchanged, i.e. the first driving signal **22** generated using the amplitude modulation can be also for modulating the Q-component, and the second driving signal **23** generated using the multicarrier modulation can be also for modulating the I-component of the optical signal.

More specifically, the amplitude modulation stage **203** may perform Binary-Phase-Shift-Keying (BPSK) modulation and/or Pulse-Amplitude Modulation (PAM). Accordingly, the generated first driving signal **22** comprises an amplitude modulation signal having amplitude modulation symbols (e.g. BPSK symbols and/or PAM symbols). For example, the amplitude modulation stage **203** can include a BPSK and/or PAM mapper. On the other hand, the generated second driving signal **23** comprises a multicarrier signal having a plurality of frequency sub-bands associated with a plurality of complex-valued modulation symbols, and the multicarrier modulation stage **204** may generate the complex-valued modulation symbols comprising Quadrature-Phase-Shift-Keying (QPSK) symbols and/or Quadrature-Amplitude-Modulation (QAM) symbols. In particular, the complex-valued modulation symbols comprise a set of parallel complex-valued modulation symbols, and the multicarrier modulation stage **204** comprises a serial-to-parallel converter (not shown) to convert a serial data bit stream (which may be the data stream **21** or a portion of the data stream **21**) into the set of parallel complex-valued modulation symbols using a complex-valued modulation mapper **205** accordingly. The complex-valued modulation mapper **205** can therefore be a QPSK and/or QAM mapper.

The multicarrier modulation stage **204** also includes a transforming stage **207** to transform the complex-valued modulation symbols into the multicarrier signal, so that each of the complex-valued modulation symbols is assigned to one frequency sub-band of the multicarrier signal, respectively. Also, the complex-valued modulation symbols can be assigned to different frequency sub-bands of the multicarrier signal. For example, the transforming stage **207** can include an inverse fast Fourier transform (IFFT) stage to transform the complex-valued modulation symbols into the multicarrier signal. Furthermore, the multicarrier modulation stage **204** includes a Hermitian symmetry operation stage **206** to process the generated complex-valued modulation symbols such that the complex-valued modulation symbols satisfy the Hermitian symmetry prior to the transformation. As a result, the transformed multicarrier signal is a real-value time sequence which has a Gaussian-like distribution, e.g. a discrete multitone (DMT) signal.

**Fig. 2(b)** graphically illustrates a sub-quadrature DMT modulation according to embodiments of the disclosure. In this example, BPSK modulation is used for modulating the I-component (i.e. the real part) of the optical signal through the first driving signal **22**. Thus, it can be observed that BPSK signals appears on the real axis of the constellation **213**. On the other hand, a DMT signal is created from complex modulation formats. In this example, QPSK is used as illustrated in the constellation **210**. The QPSK signals are passed to an inverse fast Fourier transform stage (IFFT) **215** where the signals are also converted to have Hermitian symmetry such that

$$S_{2N-n} = S_n^*$$

where S denotes the signal that is sent to the IFFT stage, N represents the number of input complex symbols and (.)* denotes the conjugation operation. By assuring that the signal has Hermitian symmetry, the output of the IFFT stage is real-valued and can thus be mapped to the imaginary quadrature of the constellation (e.g. through a 90° phase shifter in the I/Q modulator **201**) without impairing the signal in the real axis. As mentioned above, the output real-valued DMT signal has a Gaussian-like distribution which can have an energy distribution as shown by the curve **211**, i.e. most of the energy of the DMT signal is located around zero. The output of the IFFT stage is then phase-shifted by 90° to map to the imaginary axis shown by the curve **212** and then combined with the modulation on the real axis, e.g. a BPSK modulation signal on the real axis signal as illustrated in **213**. Consequently, the optical modulator **201** modulating the optical source **202** based on the first driving signal (e.g. the BPSK signal) and the second driving signal (e.g. the DMT-QPSK signal) to obtain the modulated optical signal provides the total complex signal which still resembles a real valued signal with minor perturbations, as illustrated in the constellation **214**. Thus, most of the nonlinear distortions will still manifest along the imaginary axis.

In this case where BPSK is used for the real-valued modulation and QPSK is used for the DMT carriers, the spectral efficiency is the same as QPSK effectively inheriting the benefits of increased nonlinear tolerance that PCTW transmission possesses, without reducing the spectral efficiency. It is noted that the DMT-QPSK part carries the same number of bits/s as the BPSK part, as the QPSK signals are occupying two time slots due to the Hermitian symmetry condition. As a result, the overall spectral efficiency of the proposed scheme combining BPSK and DMT-QPSK is the same as a conventional QPSK modulation scheme. In other words, for equal uncoded spectral efficiency as QPSK, BPSK can be transmitted on the real axis and QPSK signals can be transmitted on the DMT subcarriers.

Further according to embodiments, the transmitter may include a power adjusting unit (not shown) to adjust power for the I-component and/or the Q-component. The performance of the DMT-QPSK part and the BPSK part can thus be made equal for a linear domain by adjusting the transmitted power of the two quadratures (i.e. the I- and Q-components). In nonlinear transmission this power ratio can be adjusted for equal performance at the target distance. Alternatively, the overall spectral efficiency may be reduced by transmitting a lower order modulation format on the DMT part, while lowering the impairment on the real axis modulation. For example, the complex-valued modulation mapper **205** can be a lower order modulation format mapper. For further optimization, the discrete tones of the DMT signal can be modulated with different modulation formats depending on the performance of each subcarrier. For example, a more complex implementation of this system optimizes the modulation format of the subcarriers of the DMT signal using water-filling (i.e. an optimum rate-adaptive algorithm computing the maximum achievable bit-rate which can be used for bit-loading in DMT modulation) for maximized throughput taking both the noise from the linear and nonlinear effects into account. In addition, the processor **200** also includes a pre-distortion stage (not shown) to pre-distort the first driving signal and/or the second driving signal.

In some embodiments, higher order PAM signals can be transmitted on the real axis, while real-valued higher order DMT-QAM signals can be transmitted on the imaginary axis. According to this concept, a real-value DMT-QAM signal having a Gaussian-like energy distribution applied for modulating one axis (e.g. the Q-component) of the optical signal is combined with a PAM signal for modulating the other axis (e.g. the I-component). Since most energy of the DMT-QAM signal is located around zero amplitude/power, the joint effect of the PAM signal and the DMT-QAM signal makes a contribution to the modulated optical signal to still resemble a real-valued signal with minor perturbations, thereby revealing similar behaviour as a phase conjugated twin wave (PCTW) signal, which exhibits increased nonlinear transmission tolerance compared to conventional modulation formats. As a result, increased nonlinear transmission performance can be achieved by using the combined modulation scheme as proposed in the application. Additionally, the skilled person will appreciate that the modulated optical signal generated using the proposed scheme may be transmitted through an optical channel formed by an optimum dispersion mapped optical fiber link (e.g. using inline post-, pre-, hybrid-dispersion compensation, and so on). For further performance optimization, the dispersion map of the link can be adapted, either per span (e.g. applying inline dispersion compensation), or in the transmitter (e.g. applying the pre-distortion stage).

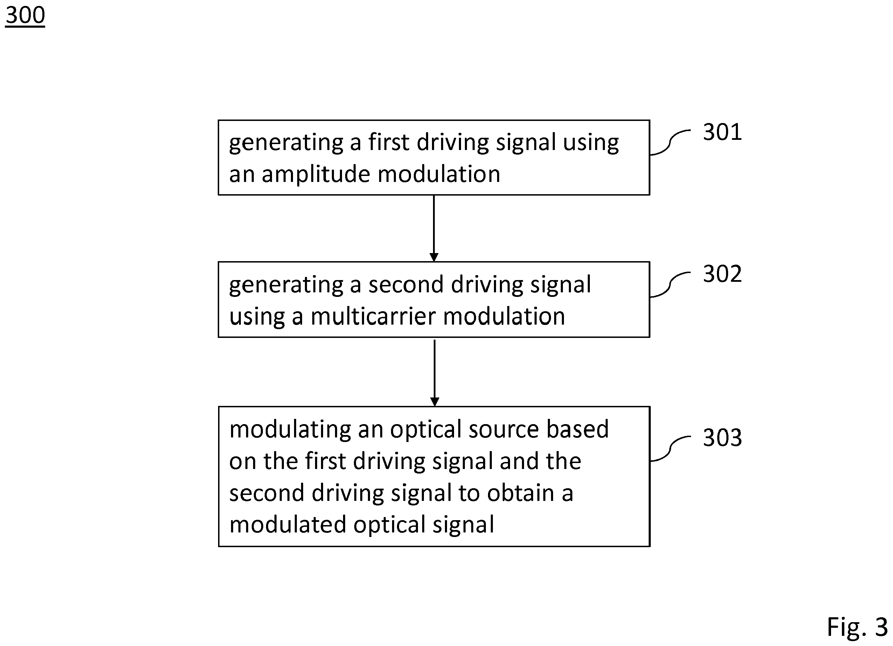

Fig. 3 illustrates processing steps for the optical modulation method according to embodiments of the disclosure. The method **300** can be implemented at the transmitter side, e.g. the optical transmitter **2,** by the optical modulator **201** and the processor **200,** e.g. in a DSP. The method **300** comprises generating (step **301**) a first driving signal using an amplitude modulation. The method **300** also comprises generating (step **302**) a second driving signal using a multicarrier modulation. The method **300** comprises modulating (step **303**) an optical source based on the first driving signal and the second driving signal to obtain a modulated optical signal. In particular, one of the first driving signal and the second driving signal is for modulating the I-component of the optical signal and the other of the first driving signal and the second driving signal is for modulating the Q-component of the optical signal.

It should be noted that the device features described above correspond to respective method features that may however not explicitly be described, for reasons of conciseness. The disclosure of the present document is considered to extend also to such method features.

It is therefore appreciated that the proposed optical modulation device and method generate an optical modulated signal which behaves similarly to PCTW signals but without sacrificing in spectral efficiency, allowing for transmission with increased nonlinear tolerance. Accordingly, high computational-complexed signal processing for nonlinearity equalization is not needed for systems using the proposed modulation schemes. Further, no changes of the channel itself is required which enhances the flexibility of link deployment.

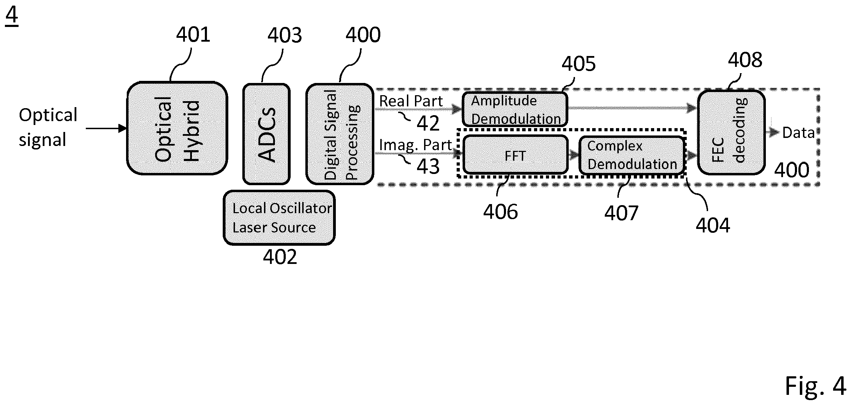

Fig. 4 is a schematic illustration of one possible implementation of an optical receiver **4** according to embodiments of the disclosure. The optical receiver **4** includes an optical demodulation device and a local oscillator **402** (e.g. a laser source). The optical demodulation device comprises a signal converting module to convert an optical signal into a corresponding electrical signal. The skilled person will be appreciated that the signal converting module comprises an optical hybrid unit **401** and analog-to-digital converter(s) (ADCs) **403** to convert a received optical signal into a based-band electrical signal through mixing with the local oscillator **402**. As such, a first component **42** of the electrical signal is associated with a first component of the optical signal and a second component **43** of the electrical signal is associated with a second component of the optical signal. In general, one of the first and second components of the optical signal serves as the I-component and the other of the first and second components serves as the Q-component of the optical signal. Furthermore, the optical demodulation device includes a processor **400** (e.g. a DSP) to process the first component **42** of the electrical signal using an amplitude demodulation. The processor **400** also processes the second component of the electrical signal using a multicarrier demodulation. Thus, the second component **43** of the electrical signal may comprise a multicarrier signal, e.g. a discrete multitone (DMT) signal which is a real-value time sequence having a Gaussian-like distribution.

Similar to the processor **200,** the processor **400** performs several algorithms referring to various processing stages to recover the received signal. For example, the processor **400** processes the received signal, i.e. the converted electrical signal, by a dispersion compensation stage (e.g. using a dispersion compensation algorithm) to improve the performance of the proposed scheme by e.g. optimizing the dispersion map. According to the embodiment, the processor **400** performs an amplitude demodulation stage **405** for demodulating the first component **42** of the electrical signal, i.e. to demodulate the I-component of the received signal. The processor **400** further performs a multicarrier demodulation stage **404** for demodulating the second component **43** of the electrical signal, i.e. to demodulate the Q-component of the received signal. Similar to as mentioned for the processor **200,** the roles of the first component of the electrical signal and the second component of the electrical signal can be exchanged, i.e. the first component of the electrical signal **42** processed using the amplitude demodulation can also relate to the Q-component, and the second component of the electrical signal **43** processed using the multicarrier demodulation can also relate to the I-component of the received signal.

More specifically, the first component of the electrical signal **42** comprises an amplitude modulation signal having amplitude modulation symbols (e.g. BPSK symbols and/or PAM symbols). Thus, to demodulate the respective component (i.e. the I- or Q-component) of the received signal, the amplitude demodulation stage **405** in this example performs Binary-Phase-Shift-Keying (BPSK) demodulation and/or Pulse-Amplitude Modulation (PAM) demodulation. In some embodiments, the amplitude demodulation stage **405** can include a BPSK demapper and/or a PAM demapper. However, the modulation format for the amplitude modulation is not restricted to the rectangular PAM signals as mentioned herein, and any type of amplitude modulation format (including probabilistically-shaped real-valued signals) is also applicable to the amplitude modulation. On the other hand, the second component of the electrical signal **43** comprises a multicarrier signal having a plurality of frequency sub-bands associated with a plurality of complex-valued modulation symbols, and the multicarrier demodulation stage **404** decodes/demodulates the complex-valued modulation symbols comprising Quadrature-Phase-Shift-Keying (QPSK) symbols and/or Quadrature-Amplitude-Modulation (QAM) symbols.

In detail, the multicarrier demodulation stage **404** includes a transforming stage **406** to transform the multicarrier signal into the complex-valued modulation symbols. For example, the transforming stage **406** can be or include a fast Fourier transform (FFT) stage. In particular, each of the complex-valued modulation symbols is assigned to a corresponding one of the frequency sub-bands of the multicarrier signal. For example, the complex-valued modulation symbols are assigned to different frequency sub-bands of the multicarrier signal. Moreover, the complex-valued modulation symbols comprise a set of parallel complex-valued modulation symbols, and the multicarrier demodulation stage **404** comprises a serial-to-parallel converter (not shown) to convert the set of parallel complex-valued modulation symbols into a serial data bit stream using a complex-valued modulation demapper **407** accordingly. As mentioned above, the complex-valued modulation demapper **407** can be a Quadrature-Phase-Shift-Keying (QPSK) demapper and/or a Quadrature-Amplitude-Modulation (QAM) demapper. Similar to as mentioned for the processor **200,** the amplitude demodulation stage **405** can also perform higher order PAM demodulation and the complex-valued modulation demapper **407** can also be a higher order QAM demapper depending on the respective modulation formats used at the transmitter side, i.e. the modulation formats for the first component of the electrical signal **42** and for the second component of the electrical signal **43.** In some embodiments, the complex-valued modulation demapper **407** can also be a lower order modulation format demapper, and/or the complex-valued modulation demapper **407** can also include demappers of different modulation formats for demodulating different subcarrier signals in case that the subcarrier signals are modulated with different modulation formats at the transmitter side.

Subsequently, the decoded/demodulated components are sent to a forward error correction (FEC) decoder **408** which uses, for example, but not limited to the parity bits added by the transmit path FEC encoder **208** to perform forward error correction. In other embodiments, the FEC encoder/decoder can also apply soft-decision FEC and/or non-binary FEC schemes. It is further noted that the digital signal processing performed by the processor **400** should be adapted to this scheme, possibly using a blind equalizer (e.g. conventional blind BPSK algorithms) or a training symbol based algorithms depending on which platform this scheme will be integrated with. Moreover, the choice of guard-band and the number of symbols used for the multicarrier signal (e.g. the DMT signal) should be adapted depending on the hardware used. Although the examples above are made comparing the proposed scheme to QPSK (i.e. the spectral efficiency of the modulation scheme combining BPSK and DMT-QPSK), the spectral efficiency can be further increased by applying higher order PAM in combination with higher spectral efficiency modulation of the subcarriers. For instance, to achieve the same spectral efficiency as 16QAM, 4-PAM in combination with DMT-16QAM can be used.

Accordingly, the proposed optical demodulation device is applied at the receiver side to demodulate the received signal which has been modulated using the proposed optical modulation method and/or the proposed optical modulation device as indicated above. In particular, the modulation part of the system is designed to provide a modulated optical signal having higher tolerance towards fiber nonlinear effects and therefore increased transmission distance can be achieved without changing the channel itself or implementing computational-inefficient signal processing for nonlinearity mitigation. It is noted that for further performance optimization, the dispersion map of the link can be adapted, either per span (e.g. applying inline dispersion compensation), or in the receiver (e.g. applying the dispersion compensation stage).

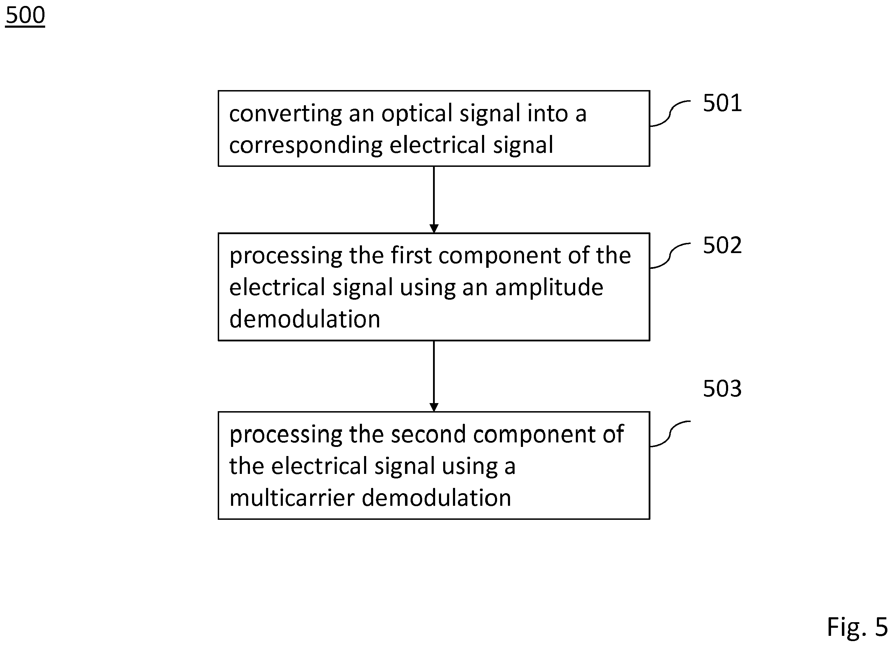

Fig. 5 illustrates processing steps for the optical demodulation method according to embodiments of the disclosure. The method **500** can be implemented at the receiver side, e.g. the optical receiver **4,** by the signal converting module and the processor **400,** e.g. in a DSP. The method **500** comprises converting (step **501**) an optical signal into a corresponding electrical signal. In particular, a first component of the electrical signal is associated with a first component of the optical signal and a second component of the electrical signal is associated with a second component of the optical signal. It is noted that one of the first and second components of the optical signal is the I-component and the other of the first and second components is the Q-component of the optical signal. The method **500** also comprises processing (step **502**) the first component of the electrical signal using an amplitude demodulation. The method **500** comprises processing (step **503**) the second component of the electrical signal using a multicarrier demodulation. It is to be noted that steps 502 and 503 may be performed in parallel and need not be processed in series as shown in Fig. 5.

It should be noted that the device features described above correspond to respective method features that may however not explicitly be described, for reasons of conciseness. The disclosure of the present document is considered to extend also to such method features.

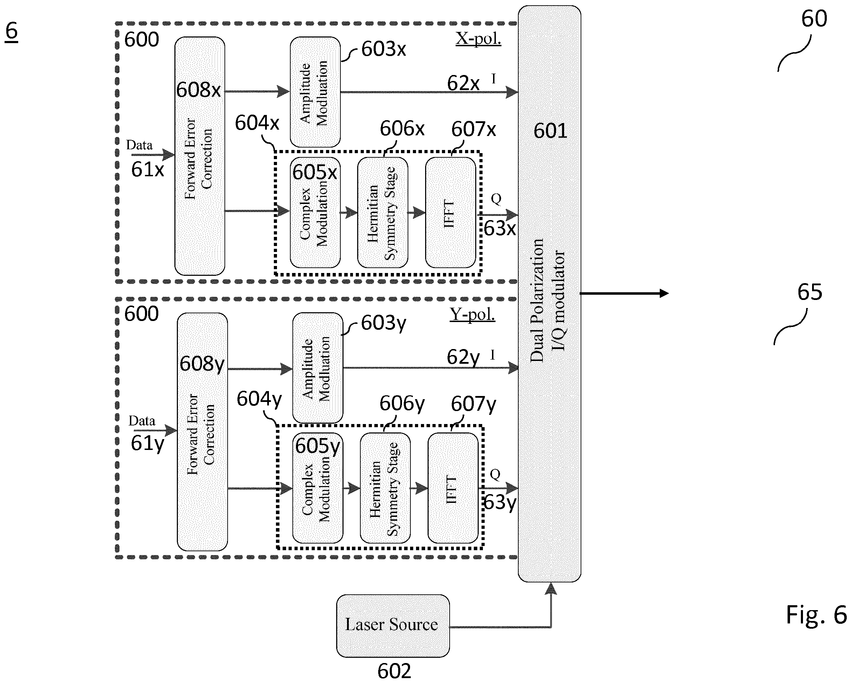

**Fig. 6** is a schematic illustration of one possible implementation of an optical transmitter **6** according to embodiments of the disclosure. The optical transmitter **6** has a similar setup as the optical transmitter **2** but is extended to provide a dual-polarization optical signal comprising a first polarization signal (e.g. the x-polarization signal or the γ-polarization) and a second polarization signal (e.g. the γ-polarization signal or the x-polarization). The optical transmitter **6** includes an optical modulation device and an optical source **602** (e.g. a laser source). The optical modulation device comprises a processor **600** (e.g. a DSP) and an optical modulator **601.** In particular, the processor **600** receives an incoming data stream **61x, 61y** and converts the data stream **61x, 61y** into a proper form for providing one or more modulation driving signals to be received by the optical modulator **601** to generate a modulated dual-polarization optical signal. It is noted that digital-to-analog converter(s) (DACs) for converting the output(s) of the processor **600** into the driving signals are omitted for simplicity. Also, the data stream 61x, 61y can be two independent data streams coming from different sources or as portions of a data from the same source, and they can be identical or different from each other. As shown by the setup of **Fig. 6,** the processor **600** provides four driving signals **62x, 63x, 62y, 63y,** one of which serves as the first in-phase (I) component for modulating the I-component (i.e. the real part) of the first polarization signal, one of which serves as the first quadrature (Q) component for modulating the Q-component (i.e. the imaginary part) of the first polarization signal, one of which serves as the second I-component for modulating the I-component of the second polarization signal, the other of which serves as the second Q-component for modulating the Q-component of the second polarization signal.

In order to convert the data stream **61x, 61y** into a suitable form, the processor **600** working in the digital domain may perform several algorithms referring to various processing stages. The data stream **61x, 61y** firstly passes a forward error correction (FEC) encoder **608x, 608y** which adds parity bits to the data that will be used for error correction by a receiver. As mentioned above, the FEC encoder can also apply non-binary or soft-decision FEC schemes, i.e. it can add parity bits or parity-symbols. It is to be noted that applying FEC is not mandatory and the disclosed system can operate without it. According to the embodiment, the processor **600** then performs an amplitude modulation stage **603x** for generating a first driving signal **62x** to modulate the I-component of the first polarization signal (e.g. the x-polarization signal). In other words, the processor **600** generates the first driving signal **62x** using an amplitude modulation. The processor **600** further performs a multicarrier modulation stage **604x** for generating a second driving signal **63x** to modulate the Q-component of the first polarization signal (e.g. the x-polarization signal), which means the processor **600** generates the second driving signal **63x** using a multicarrier modulation. However, the roles of the first driving signal and the second driving signal can be exchanged, i.e. the first driving signal **62x** generated using the amplitude modulation can be also for modulating the Q-component of the first polarization signal, and the second driving signal **63x** generated using the multicarrier modulation can be also for modulating the I-component of the first polarization signal.

Similarly, the processor **600** also performs a further amplitude modulation stage **603y** for generating a third driving signal **62y** to modulate the I-component of the second polarization signal (e.g. the γ-polarization signal). In other words, the processor **600** generates the third driving signal **62y** using a further amplitude modulation. The processor **600** also performs a further multicarrier modulation stage **604y** for generating a fourth driving signal **63y** to modulate the Q-component of the second polarization signal (e.g. the γ-polarization signal), which means the processor **600** generates the fourth driving signal **63y** using a further multicarrier modulation. Similarly, the roles of the third driving signal and the fourth driving signal can be exchanged, i.e. the third driving signal **62y** generated using the further amplitude modulation can be also for modulating the Q-component of the second polarization signal, and the fourth driving signal **63y** generated using the further multicarrier modulation can be also for modulating the I-component of the second polarization signal. It is further to be noted that the roles of the first and the second polarization signal can be exchanged, i.e. the first polarization signal may also be referred to the γ-polarization signal and the second polarization signal may also be referred to the x-polarization signal.

More specifically, the amplitude modulation stage **603x** may perform Binary-Phase-Shift-Keying (BPSK) modulation and/or Pulse-Amplitude Modulation (PAM). Accordingly, the generated first driving signal **62x** may comprise an amplitude modulation signal having amplitude modulation symbols (e.g. BPSK symbols and/or PAM symbols). For example, the amplitude modulation stage **603x** can include a BPSK and/or PAM mapper. On the other hand, the generated second driving signal **63x** comprises a multicarrier signal having a plurality of frequency sub-bands associated with a plurality of complex-valued modulation symbols, and the multicarrier modulation stage **604x** may generate the complex-valued modulation symbols comprising Quadrature-Phase-Shift-Keying (QPSK) symbols and/or Quadrature-Amplitude-Modulation (QAM) symbols. In particular, the complex-valued modulation symbols comprise a set of parallel complex-valued modulation symbols, and the multicarrier modulation stage **604x** comprises a serial-to-parallel converter (not shown) to convert a serial data bit stream (which may be the data stream **61x** or a portion of the data stream **61x**) into the set of parallel complex-valued modulation symbols using a complex-valued modulation mapper **605x** accordingly. The complex-valued modulation mapper **605x** can therefore be a QPSK and/or QAM mapper. However, the modulation format for the multicarrier modulation is not restricted to QPSK/QAM as mentioned herein, and any type of complex modulation format is also applicable to the multicarrier modulation.

The multicarrier modulation stage **604x** also includes a transforming stage **607x** to transform the complex-valued modulation symbols into the multicarrier signal, so that each of the complex-valued modulation symbols is assigned to one frequency sub-band of the multicarrier signal, respectively. For example, the transforming stage **607x** can include an inverse fast Fourier transform (IFFT) stage to transform the complex-valued modulation symbols into the multicarrier signal. Furthermore, the multicarrier modulation stage **604x** includes a Hermitian symmetry operation stage **606x** to process the generated complex-valued modulation symbols such that the complex-valued modulation symbols satisfy the Hermitian symmetry prior to the transformation. As a result, the transformed multicarrier signal (i.e. the second driving signal 63x) is a real-value time sequence which has a Gaussian-like distribution, e.g. a discrete multitone (DMT) signal. The resulting constellation diagram for the first polarization signal may be similar to constellation **214** of **Fig. 2(b)**.

Similarly, the further amplitude modulation stage **603y** may also perform Binary-Phase-Shift-Keying (BPSK) modulation and/or Pulse-Amplitude Modulation (PAM). However, the further amplitude modulation performed by **603y** can be the same or different from the amplitude modulation performed by **603x**. Accordingly, the generated third driving signal **62y** may comprise an amplitude modulation signal having amplitude modulation symbols (e.g. BPSK symbols and/or PAM symbols). For example, the further amplitude modulation stage **603y** can also include a BPSK and/or PAM mapper. On the other hand, the generated fourth driving signal **63y** comprises a multicarrier signal having a plurality of frequency sub-bands associated with a plurality of complex-valued modulation symbols, and the further multicarrier modulation stage **604y** may generate the complex-valued modulation symbols comprising Quadrature-Phase-Shift-Keying (QPSK) symbols and/or Quadrature-Amplitude-Modulation (QAM) symbols. It is also noted that the further multicarrier modulation performed by **604y** may be the same or different from the multicarrier modulation performed by **604x**. In particular, the complex-valued modulation symbols comprise a set of parallel complex-valued modulation symbols, and the further multicarrier modulation stage **604y** comprises a serial-to-parallel converter (not shown) to convert a serial data bit stream (which may be the data stream **61y** or a portion of the data stream **61y**) into the set of parallel complex-valued modulation symbols using a complex-valued modulation mapper **605y** accordingly. The complex-valued modulation mapper **605y** can therefore be a QPSK and/or QAM mapper. The skilled person will also be appreciated that the complex-valued mapper 605y may be the same or different from the mapper 605x. As indicated above, the modulation format for the multicarrier modulation is not restricted to QPSK/QAM as mentioned herein, and any type of complex modulation format is also applicable to the multicarrier modulation.

The further multicarrier modulation stage **604y** also includes a transforming stage **607y** to transform the complex-valued modulation symbols into the multicarrier signal, so that each of the complex-valued modulation symbols is assigned to one frequency sub-band of the multicarrier signal, respectively. For example, the transforming stage **607y** can include an inverse fast Fourier transform (IFFT) stage to transform the complex-valued modulation symbols into the multicarrier signal. Furthermore, the multicarrier modulation stage **604y** includes a Hermitian symmetry operation stage **606y** to process the generated complex-valued modulation symbols such that the complex-valued modulation symbols satisfy the Hermitian symmetry prior to the transformation. As a result, the transformed multicarrier signal (i.e. the fourth driving signal 63y) is a real-value time sequence which has a Gaussian-like distribution, e.g. a discrete multitone (DMT) signal. The resulting constellation diagram for the second polarization signal may be similar to constellation **214** of **Fig. 2(b)**. Accordingly, the resulting constellation diagram for the modulated signal using the optical transmitter **6** is illustrated in constellation **60** for the first (e.g. x-) polarization signal and in constellation **65** for the second (e.g. γ-) polarization signal.

More analyses regarding to the setup of **Fig. 6** are similar to those for the setup of **Fig. 2(a)** and are omitted herein for simplicity. As mentioned above, the optical modulator **601** modulating the optical source **602** based on the first driving signal (e.g. a BPSK signal), the second driving signal (e.g. a DMT-QPSK signal), the third driving signal (e.g. a BPSK signal) and the fourth driving signal (e.g. a DMT-QPSK signal) to obtain the modulated optical signal provides the total complex signal which still resembles a real valued signal with minor perturbations, thereby revealing similar behaviour as a phase conjugated twin wave (PCTW) signal, which exhibits increased nonlinear transmission tolerance. It is noted that the modulation formats used by the amplitude modulation stage **603x,** the multicarrier modulation stage **604x,** the further amplitude modulation stage **603y** and the further multicarrier modulation stage **604y** may be optimized to further improve performance as mentioned for the setup of **Fig. 2(a)**.

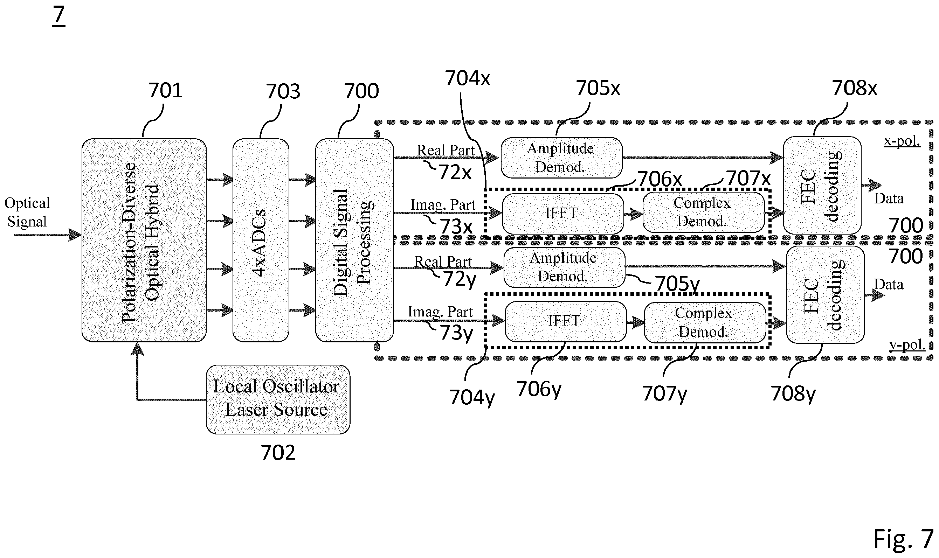

**Fig. 7** is a schematic illustration of one possible implementation of an optical receiver **7** according to embodiments of the disclosure. The optical receiver **7** has a similar setup as the optical receiver **4** but is extended to receive a dual-polarization optical signal comprising a first polarization signal (e.g. the x-polarization signal or the $\gamma$-polarization) and a second polarization signal (e.g. the $\gamma$-polarization signal or the x-polarization). The optical receiver **7** includes an optical demodulation device and a local oscillator **702** (e.g. a laser source). The optical demodulation device comprises a signal converting module to convert a dual-polarization optical signal into corresponding electrical signals. The skilled person will be appreciated that the signal converting module comprises an optical hybrid unit **701** (e.g. a polarization-diverse optical hybrid) and analog-to-digital converter(s) (ADCs) **703** to convert the received dual-polarization optical signal into based-band electrical signals through mixing with the local oscillator **702**. As such, a first component **72x** of a first electrical signal is associated with a first component of the first polarization signal and a second component **73x** of a first electrical signal is associated with a second component of the first polarization signal, where the first electrical signal is related to the first polarization signal. In general, one of the first and second components of the first polarization signal serves as the I-component and the other of the first and second components serves as the Q-component of the first polarization signal. Furthermore, the optical demodulation device includes a processor **700** (e.g. a DSP) to process the first component of the first electrical signal using an amplitude demodulation. The processor **700** also processes the second component of the first electrical signal using a multicarrier demodulation. Thus, the second component of the first electrical signal may comprise a multicarrier signal, e.g. a discrete multitone (DMT) signal which is a real-value time sequence having a Gaussian-like distribution.

Similarly, a first component **72y** of a second electrical signal is associated with a first component of the second polarization signal and a second component **73y** of a second electrical signal is associated with a second component of the second polarization signal, where the second electrical signal is related to the second polarization signal. In general, one of the first and second components of the second polarization signal serves as the I-component and the other of the first and second components serves as the Q-component of the second polarization signal. Furthermore, the processor **700** further processes the first component of the second electrical signal using a further amplitude demodulation. The processor **700** also processes the second component of the second electrical signal using a further multicarrier demodulation. Thus, the second component of the second electrical signal may also comprise a multicarrier signal, e.g. a discrete multitone (DMT) signal which is a real-value time sequence having a Gaussian-like distribution.

Similar to the processor **600,** the processor **700** performs several algorithms referring to various processing stages to recover the received signal. For example, the processor **700** processes the received signal, i.e. the converted electrical signal, by a dispersion compensation stage (e.g. using a dispersion compensation algorithm) to improve the performance of the proposed scheme by e.g. optimizing the dispersion map. According to the embodiment, the processor **700** performs an amplitude demodulation stage **705x** for demodulating the first component **72x** of the first electrical signal, i.e. to demodulate the I-component of the received first polarization signal. The processor **700** further performs a multicarrier demodulation stage **704x** for demodulating the second component **73x** of the first electrical signal, i.e. to demodulate the Q-component of the received first polarization signal. Similar to as mentioned for the processor **600,** the roles of the first component of the first electrical signal and the second component of the first electrical signal can be exchanged, i.e. the first component of the first electrical signal **72x** processed using the amplitude demodulation can also relate to the Q-component, and the second component of the first electrical signal **73x** processed using the multicarrier demodulation can also relate to the I-component.

Similarly, the processor **700** performs a further amplitude demodulation stage **705y** for demodulating the first component **72y** of the second electrical signal, i.e. to demodulate the I-component of the received second polarization signal. The processor **700** further performs a further multicarrier demodulation stage **704y** for demodulating the second component **73y** of the second electrical signal, i.e. to demodulate the Q-component of the received second polarization signal. Similar to as mentioned above, the roles of the first component of the second electrical signal and the second component of the second electrical signal can be exchanged, i.e. the first component of the second electrical signal **72y** processed using the another amplitude demodulation can also relate to the Q-component, and the second component of the second electrical signal **73y** processed using the further multicarrier demodulation can also relate to the I-component.

More specifically, the first component of the first electrical signal **72x** comprises an amplitude modulation signal having amplitude modulation symbols (e.g. BPSK symbols and/or PAM symbols). Thus, to demodulate the respective component (i.e. the I- or Q-component) of the received first polarization signal, the amplitude demodulation stage **705x** performs Binary-Phase-Shift-Keying (BPSK) demodulation and/or Pulse-Amplitude Modulation (PAM) demodulation. In some embodiment, the amplitude demodulation stage **705x** can include a BPSK demapper and/or a PAM demapper. On the other hand, the second component of the first electrical signal **73x** comprises a multicarrier signal having a plurality of frequency sub-bands associated with a plurality of complex-valued modulation symbols, and the multicarrier demodulation stage **704x** decodes/demodulates the complex-valued modulation symbols comprising Quadrature-Phase-Shift-Keying (QPSK) symbols and/or Quadrature-Amplitude-Modulation (QAM) symbols.

Also, the first component of the second electrical signal **72y** comprises an amplitude modulation signal having amplitude modulation symbols (e.g. BPSK symbols and/or PAM symbols). Thus, to demodulate the respective component (i.e. the I- or Q-component) of the received second polarization signal, the further amplitude demodulation stage **705y** performs Binary-Phase-Shift-Keying (BPSK) demodulation and/or Pulse-Amplitude Modulation (PAM) demodulation. In some embodiment, the further amplitude demodulation stage **705y** can include a BPSK demapper and/or a PAM demapper. On the other hand, the second component of the second electrical signal **73y** comprises a multicarrier signal having a plurality of frequency sub-bands associated with a plurality of complex-valued modulation symbols, and the further multicarrier demodulation stage **704y** decodes/demodulates the complex-valued modulation symbols comprising Quadrature-Phase-Shift-Keying (QPSK) symbols and/or Quadrature-Amplitude-Modulation (QAM) symbols. However, the further amplitude demodulation performed by **703y** can be the same or different from the amplitude demodulation performed by **703x,** and the further multicarrier modulation performed by **704y** may be the same or different from the multicarrier modulation performed by **704x**.

The multicarrier demodulation stage **704x** includes a transforming stage **706x** to transform the multicarrier signal into the complex-valued modulation symbols. For example, the transforming stage **706x** can be or include a fast Fourier transform (FFT) stage. In particular, each of the complex-valued modulation symbols is assigned to one frequency sub-band of the multicarrier signal, respectively. Moreover, the complex-valued modulation symbols comprise a set of parallel complex-valued modulation symbols, and the multicarrier demodulation stage **704x** comprises a serial-to-parallel converter (not shown) to convert the set of parallel complex-valued modulation symbols into a serial data bit stream using a complex-valued modulation demapper **707x** accordingly. As mentioned above, the complex-valued modulation demapper **707x** can be a Quadrature-Phase-Shift-Keying (QPSK) demapper and/or a Quadrature-Amplitude-Modulation (QAM) demapper or any complex modulation demapper. Similar to as mentioned for the processor **600,** the amplitude demodulation stage **705x** can also perform higher order PAM demodulation and the complex-valued modulation demapper **707x** can also be a higher order QAM demapper depending on the respective modulation formats used at the transmitter side, i.e. the modulation formats for the first component of the first electrical signal **72x** and for the second component of the first electrical signal **73x.** In some embodiments, the complex-valued modulation demapper **707x** can also be a lower order modulation format demapper, and/or the complex-valued modulation demapper **707x** can also include demappers of different modulation formats for demodulating different subcarrier signals in case that the subcarrier signals are modulated with different modulation formats at the transmitter side.

The further multicarrier demodulation stage **704y** also includes a transforming stage **706y** to transform the multicarrier signal into the complex-valued modulation symbols. For example, the transforming stage **706y** can be or include a fast Fourier transform (FFT) stage. In particular, each of the complex-valued modulation symbols is assigned to one frequency sub-band of the multicarrier signal, respectively. Moreover, the complex-valued modulation symbols comprise a set of parallel complex-valued modulation symbols, and the multicarrier demodulation stage **704y** comprises a serial-to-parallel converter (not shown) to convert the set of parallel complex-valued modulation symbols into a serial data bit stream using a complex-valued modulation demapper **707y** accordingly. As mentioned above, the complex-valued modulation demapper **707x** can be a Quadrature-Phase-Shift-Keying (QPSK) demapper and/or a Quadrature-Amplitude-Modulation (QAM) demapper or any complex modulation demapper. Similar to as mentioned for the processor **600,** the further amplitude demodulation stage **705y** can also perform higher order PAM demodulation and the complex-valued modulation demapper **707y** can also be a higher order QAM demapper depending on the respective modulation formats used at the transmitter side, i.e. the modulation formats for the first component of the second electrical signal **72y** and for the second component of the second electrical signal **73y.** In some embodiments, the complex-valued modulation demapper **707y** can also be a lower order modulation format demapper, and/or the complex-valued modulation demapper **707y** can also include demappers of different modulation formats for demodulating different subcarrier signals in case that the subcarrier signals are modulated with different modulation formats at the transmitter side.

Subsequently, the decoded/demodulated components are sent to a forward error correction (FEC) decoder **708x, 708y** which uses the parity bits added by the transmit path FEC encoder **208, 408x, 408y** to perform forward error correction. As mentioned above, the FEC decoder can also apply non-binary or soft-decision FEC schemes, i.e. it can add parity bits or parity-symbols. More analyses regarding to the setup of **Fig. 7** are similar to those for the setup of **Fig. 4** and are omitted herein for simplicity. It is further noted that the digital signal processing performed by the processor **700** should be adapted to this scheme, possibly using a blind equalizer (e.g. conventional blind BPSK algorithms) or a training symbol based algorithms depending on which platform this scheme will be integrated with. Moreover, the choice of guard-band and the number of symbols used for the multicarrier signal (e.g. the DMT signal) should be adapted depending on the hardware used. It is further appreciated that the spectral efficiency can be further increased by applying higher order PAM in combination with higher spectral efficiency modulation of the subcarriers, e.g. using 4-PAM in combination with DMT-16QAM to achieve the same spectral efficiency as 16QAM.

Accordingly, the proposed modulation scheme can also be used for dual-polarization transmission systems. For further performance optimization, the dispersion map of the link can be adapted, either per span (e.g. applying inline dispersion compensation), or in the transmitter (e.g. applying the pre-distortion stage as performed by the processor **200, 600**) and receiver (e.g. applying the dispersion compensation stage as performed by the processor **400, 700**).

It is therefore appreciated that increased transmission distance can be achieved by designing systems with improved tolerance to nonlinear interactions. The modulation scheme in this application transmits a combination of pulse amplitude modulation on the real axis of the optical signal and a discrete multitone (DMT) signal on the imaginary part. This modulation scheme allows for transmission with increased nonlinear tolerance without sacrificing in spectral efficiency. In particular, the energy distribution of the DMT signal is Gaussian-like, which makes the signal resemble a phase conjugated twin wave signal, with small perturbations. Thus, this scheme exhibits increased nonlinear transmission performance compared to conventional modulation formats. In the above mentioned embodiments, by using BPSK in combination with DMT-QPSK, the same spectral efficiency as conventional QPSK can be achieved, but with significantly increased robustness to nonlinear distortions.

By means of combining the transmission of amplitude modulation on one quadrature and frequency division multiplexed data on the other, the proposed modulation scheme can mitigate nonlinear distortions with only addressing the modulation/demodulation part of the transmission system. In other words, the proposed method and device described here modify only the modulation part of a conventional coherent fiber-optical transmission system, which means it can be implemented without changing the channel itself or by implementing extremely computational-heavy signal processing for nonlinear cancelation. Compared to phase conjugated twin waves, the proposed solution may have double spectral efficiency. Namely, the proposed modulation scheme utilizes the gain seen by phase conjugated twin waves transmission, without the associated loss of 1/2 spectra efficiency.

The functions of the various elements shown in Figs. 2(a), 4, 6 and 7, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context. In embodiments, some of above functions may be implemented by optical signal processing.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

It should be further noted that the description and drawings merely illustrate the principles of the proposed apparatus and method. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. An optical modulation method, the method comprising:

   generating (301) a first driving signal using an amplitude modulation;
   generating (302) a second driving signal using a multicarrier modulation; and
modulating (303) an optical source based on the first driving signal and the second driving signal to obtain a modulated optical signal, wherein one of the first driving signal and the second driving signal is for modulating the I-component of the optical signal and the other of the first driving signal and the second driving signal is for modulating the Q-component of the optical signal.

2. The method of claim 1, the generating a second driving signal using a multicarrier modulation comprising generating a multicarrier signal having a plurality of frequency sub-bands associated with a plurality of complex-valued modulation symbols.

3. The method of claim 2, the generating a multicarrier signal comprising:

   generating the plurality of complex-valued modulation symbols; and
   transforming the plurality of complex-valued modulation symbols into the multicarrier signal, wherein the complex-valued modulation symbols are assigned to the frequency sub-bands of the multicarrier signal.

4. The method of claim 3, wherein the plurality of complex-valued modulation symbols comprises a set of parallel complex-valued modulation symbols, the generating the plurality of complex-valued modulation symbols comprising converting a serial data bit stream into the set of parallel complex-valued modulation symbols using a complex-valued modulation mapping.

5. The method of claim 3 or 4, further comprising:

   applying, prior to the transforming, a Hermitian symmetry operation to the generated complex-valued modulation symbols, wherein the transforming the complex-valued modulation symbols into the multicarrier signal comprises applying an inverse fast Fourier transform (IFFT) to the complex-valued modulation symbols.

6. The method of any of claims 2 - 5, wherein the complex-valued modulation symbols are associated with the subcarrier signals of the multicarrier signal, wherein the subcarrier signals are modulated with different modulation formats, further comprising optimizing the modulation formats of the subcarrier signals of the multicarrier signal using a water-filling method.

7. The method of any of previous claims, further comprising adjusting power for the I-component and/or the Q-component of the optical signal to maximize performance of the system.

8. The method of any of previous claims, further comprising pre-distorting the first driving signal and/or the second driving signal prior to the modulating.

9. An optical demodulation method, the method comprising:

   converting (501) an optical signal into a corresponding electrical signal, wherein a first component of the electrical signal is associated with a first component of the optical signal and a second component of the electrical signal is associated with a second component of the optical signal, wherein one of the first and second components of the optical signal is the I-component and the other of the first and second components is the Q-component of the optical signal;
   processing (502) the first component of the electrical signal using an amplitude demodulation; and
   processing (503) the second component of the electrical signal using a multicarrier demodulation.

10. The method of claim 9, wherein the second component of the electrical signal comprises a multicarrier signal, the processing the second component of the electrical signal comprising:

   transforming the multicarrier signal into a plurality of complex-valued modulation symbols, wherein the plurality of complex-valued modulation symbols comprises a set of parallel complex-valued modulation symbols, and the complex-valued modulation symbols are assigned to frequency sub-bands of the multicarrier signal; and
   converting the set of parallel complex-valued modulation symbols into a serial data bit stream using a complex-valued modulation demapping.

11. The method of any of previous claims, wherein the transformed multicarrier signal comprises a real-value time sequence having most energy located around zero value of a probability distribution.

12. The method of any of previous claims, wherein the transformed multicarrier signal comprises a discrete multitone (DMT) signal.

13. The method of any of previous claims, the first driving signal and/or the first component of the electrical signal comprising a plurality of amplitude modulation symbols, wherein
the amplitude modulation symbols comprise Binary-Phase-Shift-Keying (BPSK) symbols and/or Pulse-Amplitude-Modulation (PAM) symbols; and the complex-valued modulation symbols comprise Quadrature-Phase-Shift-Keying (QPSK) symbols and/or Quadrature-Amplitude-Modulation (QAM) symbols.

14. An optical modulation device comprising:

a processor (200) configured to generate a first driving signal (22) using an amplitude modulation and a second driving signal (23) using a multicarrier modulation; and
an optical modulator (201) configured to receive the first driving signal and the second driving signal, the optical modulator configured to modulate an optical source (202) based on the first driving signal and the second driving signal to obtain a modulated optical signal, wherein one of the first driving signal and the second driving signal is for modulating the I-component of the optical signal and the other of the first driving signal and the second driving signal is for modulating the Q-component of the optical signal.

15. An optical demodulation device comprising:

a signal converting module to convert an optical signal into a corresponding electrical signal, wherein a first component (42) of the electrical signal is associated with a first component of the optical signal, and a second component (43) of the electrical signal is associated with a second component of the optical signal, wherein one of the first and second components of the optical signal is the I-component and the other of the first and second components is the Q-component of the optical signal; and
a processor (400) configured to:

process the first component of the electrical signal using an amplitude demodulation; and
process the second component of the electrical signal using a multicarrier demodulation.

Im

Im

Im

Im

Re

Re

Re

Re

x-pol

y-pol

x-pol

y-pol

(a)

(b)

Fig. 1

(a)

(b)

Fig. 2

300

| generating a first driving signal using an amplitude modulation | 301 |

| generating a second driving signal using a multicarrier modulation | 302 |

| modulating an optical source based on the first driving signal and the second driving signal to obtain a modulated optical signal | 303 |

Fig. 3

EP 3 316 499 A1

Fig. 4

**500**

| converting an optical signal into a corresponding electrical signal | 501 |

↓

| processing the first component of the electrical signal using an amplitude demodulation | 502 |

↓

| processing the second component of the electrical signal using a multicarrier demodulation | 503 |

Fig. 5

EP 3 316 499 A1

Fig. 6

60

65

**Dual Polarization I/Q modulator** 601

Laser Source 602

X-pol 62x I 607x

603x 606x

Amplitude Modulation 605x Complex Modulation

Hermitian Symmetry Stage

IFFT

Q 63x

604x

608x Forward Error Correction

Data 61x

600

Y-pol 62y I 607y

603y 606y

Amplitude Modulation 605y Complex Modulation

Hermitian Symmetry Stage

IFFT

Q 63y

604y

608y Forward Error Correction

Data 61y

600

6

Fig. 7

Europäisches
Patentamt

European
Patent Office

Office européen
des brevets

# EUROPEAN SEARCH REPORT

Application Number

EP 16 30 6407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BERIL INAN ET AL: "Realization of a 23.9 Gb/s real time optical-OFDM transmitter with a 1024 point IFFT", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 March 2011 (2011-03-06), pages 1-3, XP031946288, ISBN: 978-1-4577-0213-6 * Section 3; figure 1 * | 1-15 | INV. H04B10/50 H04B10/61 |
| Y | EP 2 672 638 A1 (ZTE USA INC [US]) 11 December 2013 (2013-12-11) * figure 1 * | 1-15 | |
| Y | LEE S C J ET AL: "Discrete Multitone Modulation for Maximizing Transmission Rate in Step-Index Plastic Optical Fibers", JOURNAL OF LIGHTWAVE TECHNOLOGY, IEEE SERVICE CENTER, NEW YORK, NY, US, vol. 27, no. 11, 1 June 2009 (2009-06-01), pages 1503-1513, XP011256261, ISSN: 0733-8724 * Section 2; figure 1 * | 6,12 | TECHNICAL FIELDS SEARCHED (IPC)<br><br>H04B |
| A | US 2016/112238 A1 (LING WILLIAM [US] ET AL) 21 April 2016 (2016-04-21) * figure 2B * | 1-15 | |

The present search report has been drawn up for all claims

| Place of search | Date of completion of the search | Examiner |
|---|---|---|
| Munich | 4 April 2017 | Inan, Beril |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 316 499 A1

## ANNEX TO THE EUROPEAN SEARCH REPORT
## ON EUROPEAN PATENT APPLICATION NO.

EP 16 30 6407

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2017

| Patent document cited in search report | | Publication date | Patent family member(s) | | Publication date |
|---|---|---|---|---|---|
| EP 2672638 | A1 | 11-12-2013 | CN 103475410 A | | 25-12-2013 |
| | | | EP 2672638 A1 | | 11-12-2013 |
| | | | JP 5650806 B2 | | 07-01-2015 |
| | | | JP 2014042229 A | | 06-03-2014 |
| | | | US 2013330070 A1 | | 12-12-2013 |
| US 2016112238 | A1 | 21-04-2016 | NONE | | |

For more details about this annex : see Official Journal of the European Patent Office, No. 12/82

EPO FORM P0459

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. LIU et al.** Phase-conjugated twin waves for communication beyond the Kerr nonlinearity limit. *Nature Photonics,* 2013, vol. 7 (7), 560-568